# EUROPÄISCHE PATENTANMELDUNG

(11) **EP 0 761 606 A2**
(43) Veröffentlichungstag der Anmeldung: **12.03.1997**
(21) Anmeldenummer: 96114491.2
(22) Anmeldetag: 10.09.1996
(51) Int. Cl.: C02F 3/12, C02F 3/20

(54) **Kleinkläranlage in kompakter Bauweise**

(30) Priorität: 12.09.1995 DE 19533737
(71) Anmelder: ÖKOSERVICE GESELLSCHAFT FÜR UMWELTANALYTIK UND KLÄRANLAGENBETREUUNG GMBH, 73770 Denkendorf (DE)
(72) Erfinder: Zink, Jürgen, 70599 Stuttgart (DE)
(74) Vertreter: Fass, Gerhard

(57) **Zusammenfassung**

Es wird eine Kleinkläranlage in kompakter Bauweise aufgezeigt, bei welcher durch Ausbildung als zweistufige Kaskadenanlage bei gleicher Schlammbelastung wie bei den bekannten Anlagen eine doppelte Raumbelastung möglich ist, sodaß bei relativ geringem Volumen der Anlage eine hohe Reinigung erzielt werden kann. Dabei sind in nur einem noch transportfähigen Behälter 1 zwei Belebungskammern 2,3, eine Nachklärkammer 5 und ein Schlammstapelraum 4 samt der erforderlichen Belüftungseinrichtung und den Schlammleitungen angeordnet. Diese Anlage ist durch nur einen weiteren Behälter 30 um den Faktor drei erweiterbar.

## Beschreibung

Die Erfindung betrifft eine Kleinkläranlage in kompakter Bauweise mit einzelnen,in einem gemeinsamen Behälter angeordneten Kammern,einem Abwasserzulauf und einem Klarwasserablauf und Verbindungsleitungen zwischen einzelnen Kammern und mit einer Einrichtung zur Belüftung.

Es besteht seit langem und vermehrt ein Bedarf an Kleinkläranlagen zB für Aussiedlerhöfe,Gaststätten oder Erholungseinrichtungen,die wegen ihrer Lage nicht an die kommunale Abwasserentsorgung angeschlossen sind. Solche Kleinkläranlagen sollen möglichst einfach einzubauen sein. Das bedeutet insbesondere,daß diese Anlagen aus möglichst wenigen großen Bauteilen bestehen müssen,die als vormontierte Einheiten an den Einbauort gebracht werden müssen,sodaß nur noch einzelne Rohrleitungen anzuschließen sind.Es sollten nur noch Verbindungen zwischen vorgegebene Stutzen herzustellen sein.Dabei hat es sich gezeigt,daß die Verbindung von zwei Behältern noch leicht herzustellen ist,während bei drei oder noch mehr Behältern der Aufwand sehr ansteigt.Das liegt insbesondere daran,daß die Behälter unterirdisch angeordnet werden müssen.
Darüber hinaus muß bei Kleinkläranlagen zukünftig darauf geachtet werden,daß der bei der Abwasserbehandlung anfallende Schlamm kostengünstig entsorgt werden kann.Aufgrund gesetzlicher Regelungen darf Klärschlamm nicht mehr wie bisher auf Deponien gelagert werden. Dieser muß entweder landwirtschaftlich verwertet oder in einem aufwendigen Verfahren getrocknet und anschließend verbrannt werden. Letzteres Verfahren ist nur bei großen Klärwerken, also in städtischen Ballungsgebieten wirtschaftlich. Den Schlamm aus biologischen Kleinkläranlagen, die sich überwiegend im ländlichen Raum befinden zu verbrennen, würde bedeuten, daß dieser nur über lange Transportwege und damit hohe Transportkosten mit Umweltbelastung durch LKWs entsorgt werden könnte.
Kleinkläranlagen der bekannten Ausführungen weisen im allgemeinen eine mechnische Vorreinigung auf. Die durch Sedimentationsvorgänge anfallende Schlämme,sogenannte Fäkalschlämme, sind biologisch nicht stabilisiert und dürfen daher nur in Ausnahmefällen landwirtschaftlich verwertet werden.Eine Weiterbehandlung zum Zwecke der landwirtschaftlichen Verwertung durch sogenanntes Vererden mittels Pflanzenkläranlagen ist mit Fäkalschlämmen erfahrungsgemäß nicht möglich, so daß zur ordnungsgemäßen Entsorgung nur die aus den beschriebenen Gründen mit Nachteilen behaftete Verbrennung offenbleibt.

Es sind bereits Kleinkläranlagen bekannt,die für eine vollbiologische Reinigung häuslicher Abwässer für einen Abwasseranfall von bis etwa 50 Personen mit zwei Behältern,nämlich einer Vorklärung und einem Belebungsbecken mit mittelblasiger Intervallbelüftung auskommen.Bei einer Vergrößerung der Anlage für etwa 150 Personen sind jedoch schon fünf Behälter erforderlich,was einen enormen Einbauaufwand erfordert.

Es ist ferner schon eine Kleinkläranlage mit Abwasserbelüftung bekannt die aus nur einem einzigen Behälter besteht. Bei dieser Anlage ist in einem einzigen Behälter ein Faulraum,nur eine Belebungskammer,eine Vorkammer und eine Nachklärkammer angeordnet.Dabei erfolgt zwischen der Vorkammer und der Belebungskammer ein Überlauf in die Belebungskammer.Aus der Belebungskammer wird bei dieser Anlage das weitgehend schlammfreie Abwasser über einem Beruhigungsraum der Nachklärkammer über eine Tauchwand zugeführt und von dort über einen Ablaufschacht abgezogen.Über eine Luftzufährleitung wird die erforderliche Luft der Belebungskammer und der Vorkammer zugeführt.Diese Anlage weist jedoch erhebliche Nachteile auf. Sie verlangt einen relativ großen Faulraum,um doch nur eine mechanische Vorreinigung zu erreichen. Dabei setzt sich der Schlamm ab und das Wasser fließt durch hydraulichen Druck in das Belebungsbecken. Dadurch sammelt sich in dem Faulraum biologisch-nichtstabilisierter Fäkalschlamm mit entsprechender Geruchsbelästigung an.Dieser Faulraum muß von Zeit zu Zeit entleert und der Faulschlamm weiter bearbeitet werden.Weil biologisch-nichtstabilisierter Faulschlamm nicht auf landwirtschaftlich genutzte Felder aufgebracht werden darf.

Ausgehend von diesem Stand der Technik liegt der Erfindung die Aufgabe zugrunde eine relativ kleine Kläranlage aufzuzeigen, die aus nur wenigen Einzelelementen besteht und ohne besonderen Aufwand vorort einzubauen ist und die eine landwirtschaftliche Entsorgung der Schlämme aus Kleinkläranlagen auf wirtschaftliche Weise möglich ist. Dabei müssen die für den Transport des Behälters vorgegebenen Abmessungen eingehalten werden,um einen komplett vormontierten Behälter anliefern und einbauen zu können.Ferner sollen bei kleinstmöglichen Abmessungen größere Mengen Abwasser gereinigt werden und nur biologisch-stabilisierter Schlamm anfallen,der auf landwirtschaftlich genutzte Flächen aufgebracht werden darf. Die Anlage soll ferner mit geringem Einbauaufwand von nur einem weiteren Behälter bis auf eine Einwohnerzahl von etwa 150 ausbaufähig sein.

Die Lösung der Aufgabe ist eine Kleinkläranlage mit den Merkmalen,daß in einem runden Behälter zwei etwa volumengleiche Belebungskammern,die durch eine Verbindungsleitung miteinander verbunden sind, ferner eine Nachklärkammer sowie ein Schlammstapelraum sowie eine Belüftung und zwischen der ersten Belebungskammer und dem Schlammstapelraum eine Trübwasserleitung sowie eine Schwimmschlammleitung zwischen dem Schlammstapelraum und einem Überlauf in der Nachklärkammer und eine Schlammüberschußleitung zwischen der Nachklärkammer und dem Schlammstapelraum angeordnet ist.

Damit wird eine Anlage erreicht, bei welcher infolge der runden, vorzugsweise kreiszylindrischen Ausbildung Vorteile in der Statik gegeben sind, sodaß eine gleichförmige Belastung von Erddruck von außen und von Wasserdruck von innen aufweist. Dabei kann die Wandstärke des Behälters auf ein Minimum reduziert werden kann. Ferner sind alle zur Reinigung erforderlichen Bauteile in einem Behälter angeordnet , mit einem direkten Zufluß des zu reinigenden Abwassers in die erste der beiden Belebungskammern. Natürlich kann der direkte Zufluß auch aus einer Vorklärkammer erfolgen, falls diese bereits vorhanden oder aus irgendwelchen Gründen vorgesehen ist. Es ist somit vor Ort nur noch erforderlich den Behälter in die für ihn vorgesehene Grube einzusetzen und Zufluß und Abfluß anzuschließen.
Eine derart kompakte Anlage ist ferner dadurch möglich, daß in dem einen Behälter zwei Belebungsbecken angeordnet sind, sodaß eine zweistufige Kaskadenanlage entsteht. Damit kann das erforderliche Nutzvolumen besonders gering gehalten werden, was einen besonderen Vorteil der runden Ausführung mit mindestens zwei hintereinander geschalteten Belebungskammern ergibt.Das geringere Volumen gilt dabei auch für eine vorzugsweise fehlende Vorklärung. Bei dieser zweistufigen Kaskadenanlage fällt außerdem nur biologisch stabilisierter Überschußschlamm in der Nachklärkammer an, der auf landwirtschaftlich genutzte Flächen aufgetragen werden kann. Es muß daher eine Lösung aufgezeigt werden, die eine landwirtschaftliche Entsorgung der Schlämme aus Kleinkläranlagen auf wirtschaftliche Weise ermöglicht.Dabei kann falls gefordert vor dem Absaugen des Schlammes aus dem Schlammsammelraum eventuell noch Kalk zugegeben werden. Eine Probenentnahme des gereinigten Abwassers kann über den senkrechten Schenkel des Unterwasserablaufs aus dem Nachklärbechen erfolgen.Die zweistufige Kaskadenanlage hat den besonderen Vorteil, daß eine doppelte Raumbelastung bei gleicher Schlammbelastung wie in den bekannten Anordnungen möglich ist. Bei einer ausgeführten Anlage gemäß der Erfindung ergab sich bei einer mittleren Schlammbelastung von 0,05kg BSB5 / kg TS d eine doppelt so hohe Raumbelastung bei der Kaskadenausführung mit zwei Belebungsbecken wie es für eine einstufige Anlage möglich gewesen wäre. Dieses ergab sich aus dem über den gesammten Zeitraum in etwa doppelten Schlammgehalt der zweistufigen Kaskadenanlage gegenüber einer einstufigen . Die Raumbelastung in kg BSB 5 / cbm d betrug bei einer vergleichbaren einstufigen Anlage 0,2 und bei der zweistufigen Kaskadenanlage 0,39, was sogar noch mit einer Verbesserung der Reinigungswirkung von 87,8 % bei der einstufigen Anlage auf 93,2 % bei der zweistufigen Kaskadenanlage verbunden war. Dabei konnte, bedingt durch die hohe Schlammkonzentration in der zweistufigen Kaskadenanlage trotz einer Raumbelastung von ca 0,4 kg / cbm die Schlammbelastung bei 0,05 kg / kg d in der gleichen Größenordnung gehalten werden, wie bei einer einstufigen Anlage und auch der notwendige biologische Stabilitätsgrad des Überschußschlammes erreicht werden. Dieser Überschußschlamm konnte daher unbedenklich auf landwirtschaftlich genutzte Flächen des Betreibers der Anlage ausgebracht werden. Daher war eine Abfuhr zu einer kommunalen Kläranlage nicht erforderlich. Außerdem war der Betriebsaufwand bei der zweistufigen Kaskadenanlage nicht höher als bei der konventionellen einstufigen Belebungsanlage .

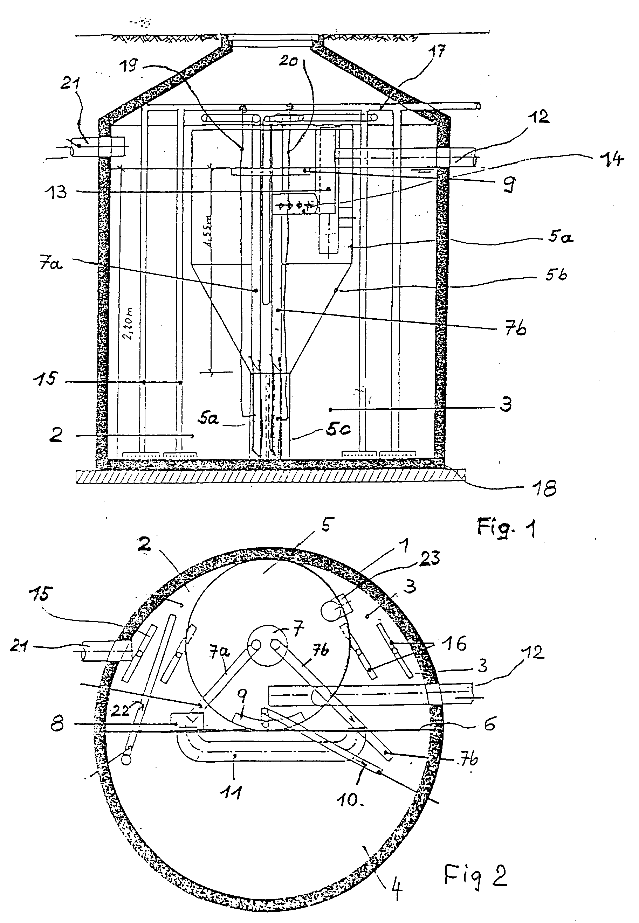

Bei einer besonders kompakten Ausführung ist der Behälter in längsrichtung in zwei etwa gleiche Abschnitte durch eine Trennwand unterteilt, wobei der eine Abschnitt den Schlammstapelraum bildet während die Nachklärkammer in dem anderen Abschnitt angeordnet ist, wobei der verbleibende Raum dieses Abschnittes in die zwei Belebungskammern durch die Wand der Nachklärkammer und eine Trennwand unterteilt ist. ( Fig.1und 2 ) Dieser besonders kompakte Aufbau ist nur durch die Ausgestaltung als zweistufige Kaskadenanordnung infolge der bereits oben beschriebenen günstigen Raumbelastung möglich. Bei dieser Ausführung ist gemäß einer besonders günstigen Weiterbildung der Durchmesser der eingesetzten Nachklärkammer gleich dem Radius des Behälters. Dadurch kann die Wand der Nachklärkammer als Teil der Trennung der beiden Belebungskammern dienen. In dem verbleibenden unteren Abschnitt ist eine Trennwand leicht an der Nachklärkammer anzuordnen, sodaß mit dem Einsetzen der Nachklärkammer mitsamt den Trennwandteilen in den Behälter die Aufteilung in die beiden Belebungskammern erfolgt. Dabei kann die Nachklärkammer lösbar angeordnet sein. Als vorteilhaft hat sich erwiesen, daß bei der Verbindungsleitung zwischen den beiden Belebungskammern, die durch den als Schlammsammelraum ausgebildeten zweiten Abschnitt des Behälters geführt ist, vor dem Eintritt, also im ersten Belebungsbecken, ein Rechenkorb angeordnet ist. Dieser Rechenkorb ist nur bei fehlender Vorklärung erforderlich und wird ständig im Gegenstrom durch das vom Luftheber der Schlammrückführung geförderte Abwasser durchspühlt, sodaß eventuelle Ablagerungen abgelöst werden und ein Zusetzen der Durchtrittsöffnungen im Rechenkorb vermieden wird. Die Lufteintragsvorrichtung im ersten Belebungsbecken ist so angeordnet, daß im Bereich des Rechenkorbes eine aufwärtsgerichtete Luft / Wasserströmung entsteht, die ebenfalls anhaftende Stoffe von dem Rechenkorb löst und fortträgt. Es hat sich als vorteilhaft erwiesen, daß die Nachklärkammer aus einem zylindrischen Teil und einem nach unten verjüngten kegelstumpfförmigen Teil besteht und in dem Behälter auf Stelzen angeordnet ist. durch das Hochlegen der Nachklärkammer ist zugleich der Schlammabzug optimiert.
Nach einer weiteren Ausgestaltung kann der Behälter einen Anschlußstutzen für eine Vorklärkammer aufweisen. Dabei kann eine eventuell bereits vorhandene Vorklärkammer leicht an den Zulauf in das erste Belebungsbecken angeschlossen werden. Falls durch besondere nicht übliche Belastungen eine Vorklärung erforderlich ist kann diese dadurch leicht, gegebenenfalls nachträglich installiert und angeschlossen werden.

Durch den Aufbau aus einzelnen Bauelementen ( Nachklärbecken mit Trennwand, Behälter und Belüftungsmittel ) ist diese Anordnung auch besonders geeignet für eine spätere Erweiterung. Dies kann nötig sein zB durch Erhöhung der Personenzahl in einem Aussiedlerhof oder Vergrößerung einer Gasstätte. Bei einer Vergrößerung bis auf etwa das dreifache, also von etwa 50 auf 150 Personen ist bei der zweistufigen Kaskadenanlage nur ein weiterer Behälter erforderlich. Dabei kann- im Gegensatz zu den bekannten Anlagen - die Erweiterung vor Ort vorgenommen werden, da nur ein weiterer Behälter angeordnet werden muß. Für eine solche Erweiterung ergeben sich die in der nachfolgenden Figurenbeschreibung aufgezeigten Varianten.

In den Figuren 1-4 ist ein Ausführungsbeispiel einer zweistufigen Kaskadenanlage vereinfacht und schematisch dargestellt und nur schematisch zwei mögliche Erweiterungsvarianten.

In den Figuren 1 und 2 ist als Ausführungsbeispiel vereinfacht und schematisch eine Anlage mit in einem Behälter 1 integrierten zwei Belebungskammern 2,3 und einem Schlammstapelraum 4 sowie einer Nachklärkammer 5. In dem Behälter 1 ist eine Trennwand 6 eingezogen, die im Ausführungsbeispiel den Behälter 1 in zwei etwa gleiche Abschnitte unterteilt. Dabei bildet der eine Abschnitt den Schlammstapelraum 4. In dem anderen Abschnitt ist eine vorzugsweise zylinderförmige Nachklärkammer 5 eingesetzt. Die beiden verbleibenden Segmente dieses Abschnitts bilden die Belebungskammern 2,3. Die Verbindung zwischen der Belebungskammer 3 und der Nachklärkammer 5 erfolgt durch den Zulauf 23.
Die Nachklärkammer 5 besteht aus einem zylindrischen Teil 5a dessen Durchmesser gleich dem Radius des Behälters 1 ist. Nach unten verjüngt sich dieser zylindrische Teil 5a in einem kegelstumpfförmigen Teil 5b wobei die Teile 5a und 5b im Ausführungsbeispiel gleiche Höhe aufweisen die jedoch geringer ist als die Höhe des Behälters 1 weil in der Nachklärkammer 5 ein relativ geringes Volumen erforderlich ist,während die Belebungskammern 2,3 viel Volumen verlangen. Daher wird die Nachklärkammer 5 aufgestelzt mit Stelzen 5c. Zwischen den Stelzen 5c verläuft auch rechtwinklig zur Trennwand 6 und an diese stoßend eine Trennwand 5d, die in dem kegelstumpfförmigen Abschnitt 5b und dem darunterliegenden Abschnitt die beiden Belebungskammern 2,3 trennt, sodaß die Nachklärkammer 5 mit dem Abschnitt 5a und dieser Trennwand 5d die Trennung der Belebungskammern 2,3 bewirkt. Axial in der Nachklärkammer 5 ist eine Schlammabführung7 angeordnet. Diese durchdringt die Nachklärkammer 5. Sie besteht aus zwei Leitungen 7a und 7b. Die Leitung 7a bildet eine Schlammrücklaufleitung und mündet vor einem in der Trennwand 6 angeordneten Rechenkorb 8 im Belebungsbecken 2. Die andere Leitung 7b dient zur Förderung des Überschußschlammes in den Schlammstapelraum 4. Der Schwimmschlamm im Nachklärbecken 5 wird aus einem Überlaufsammelraum 9 über eine Leitung 10 dem Schlammstapelraum 4 zugeführt. Die Verbindung zwischen der Belebungskammer 2 und der Belebungskammer 3 erfolgt über eine Verbindungsleitung 11 die durch den Schlammstapelraum 4 geführt ist. In der Belebungskammer 2 ist der bereits genannte Rechenkorb 8 vor dem Eintritt zur Leitung 11 angeordnet. Der Ablauf des Klarwassers erfolgt über eine Ablaufleitung 12. Die Zuführung des Klarwassers aus der Nachklärkammer 5 in die Ablaufleitung 12 erfolgt über einen Unterwasserablauf 13 mittels Öffnungen 14. Die Belüftung der Belebungskammern 2,3 erfolgt über Belüftungsleitungen 15,16 aus einer Sammelleitung 17 mit einem Belüfter18 am Boden der Belebungskammer 2 bzw 3. Der Luftsammelleitung 17 wird ferner über Leitungen 19,20 Luft entnommen zum Lufteintrag in die Leitungen 7a, bzw 7b, wobei der Lufteintrag im Bereich der Stelzen 5c erfolgt. Der Abwasserzulauf erfolgt über einen Zulaufstutzen 21 aus einer nicht dargestellten Vorkammer. Aus dem Schlammstapelraum 4 wird Trübwasser über die Trübwasserleitung 22 in die Belebungskammer 2 geführt. Der in dem Schlammstapelraum 4 angesammelte Schlamm kann, da er biologisch stabilisiert ist entnommen und ohne weitere Bearbeitung landwirtschaftlich genutzten Flächen oder einer Schlammdeponie zugeführt werden.

Bei dieser zweistufigen Kaskadenanlage kann die Nachklärkammer 5 natürlich auch axial in dem Behälter 1 angeordnet sein. Es kann ferner nach Anspruch 13 auch die Nachklärkammer 5 in dem Schlammstapelraum 4 angeordnet sein. Dies gilt insbesondere für kleinere Anlagen, weil sich das Schlammstapelraumvolumen bis etwa einer Belautung durch 20 Personen nicht ändert. Dadurch werden bei gleichem Durchmesser des Behälters 1 größere Belebungsbecken 2,3 gewonnen.

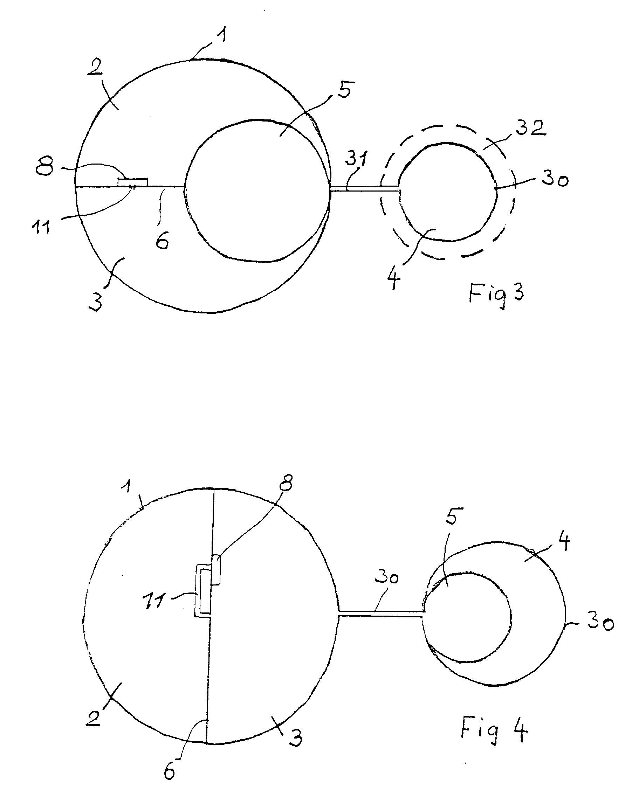

In der Fig. 3 ist eine mit relativ geringem Aufwand durchführbare Erweiterung aufgezeigt, durch welche eine zB bis zu 50 Personen geeignete Anlage auf die 3 - fache Kapazität, also bis etwa 150 Personen, erweitert werden kann. Bei dieser zweistufigen Kaskadenanlage bleibt in dem Behälter 1 die erste Belebungskammer 2 und die zweite Belebungskammer 3 sowie die Nachklärkammer 5. In dem nur schematisch dargestellten Ausführungsbeispiel ist dabei die Nachklärkammer 5 im Bereich der Trennwand 6 angeordnet, d.h. die Trennwand 6 stößt an die Wand der Nachklärkammer 5. Hierdurch reduziert sich die Verbindungsleitung 11 (Fig.1,2) auf einen glatten Durchgang durch die Trennwand 6 und der Rechenkorb 8 ist in der ersten Belebungskammer 2 vor diesem Durchgang angeordnet. Der Schlammstapelraum 4 ist bei diesem Ausführungsbeispiel aus dem Behälter 1 herausgenommen in einen zweiten zusätzlichen Behälter 30. Die Schlammzuführung erfolgt über eine Leitung 31 aus der Nachklärkammer 5. Bei dieser Erweiterung ist damit nur ein weiterer Behälter 30 sowie die Leitung 31 erforderlich. Wie in Fig. 3 gestrichelt angedeutet kann eine eventuell vorgesehene mechanische Vorklärkammer 32 axial um den Schlammstapelraum 4 des Behälters 30 angeordnet werden. Damit ergibt sich eine besonders einfach zu montierente Erweiterung einer bereits vorhandenen Anlage.

Fig. 4 zeigt eine weitere Erweiterungsvariante bei welcher in dem Behälter 1 lediglich die beiden Belebungskammern 2 und 3 zur Bildung der zweistufigen Kaskade verbleiben und in dem zusätzlichen Behälter 30 die Nachklärkammer 5 und der Schlammstapelraum 4 angeordnet sind.

Nach den Ansprüchen 10 und 11 kann bei kleinen kompakten Anlagen für zB weniger als etwa 10 Personen auch eine mechanische Vorklärung in den Behälter 1 integriert sein. Das bedeutet für derart kleine Anlagen, daß der Einbau nur eines Behälters 1 und dessen Verrohrung erforderlich ist.

In diesen Unterlagen schließt der Begriff der Vorklärung auch eine Anordnung zur Abtrennung von sink= oder schwimmfähigen Grobstoffen ein.

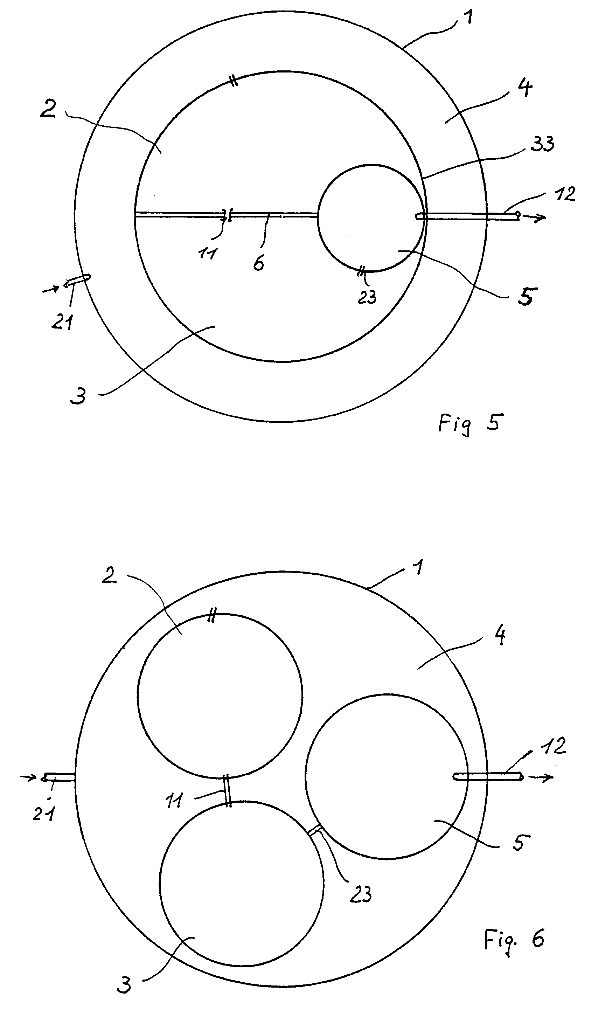

Eine weiteres Lösungsbeispiel ist in den Figuren 5 und 6 vereinfacht und schematisch dargestellt. Dabei handelt es sich analog zu den Fig. 1 und 2 um eine Einbehälteranordnung. Bei dieser Anordnung ist in dem Behälter 1 konzentrisch ein weiterer Behälter 33 angeordnet, wobei der so gebildete Ringraum der Schlammstapelraum 4 bildet. Der Behälter 33 ist analog Fig. 3 in die Belebungskammern 2, 3 unterteilt und mit einer Überleitung versehen. Um einen einwandfreien Abzug in den Schwimmstapelraum 4 zu erreichen, kann auch der Flüßigkeitsspiegel in dieser Kammer abgesenkt werden. Dieses ist etwa dann der Fall, wenn, warum auch immer im Extremfall kein Zwangsdurchsatz durch den Rechen zwischen den Belebungsbecken 2 und 3 gegeben ist. In dem Behälter 33 ist ferner, ebenfalls wie in Fig. 3 gezeigt, die Nachklärkammer 5 angeordnet, aus welcher der Abzug des gereinigten Wassers über eine den Schlammstapelraum 4 durchdringende Leitung erfolgt.

In der Fig. 5 ist eine Einbehälteranordnung mit in einem als Schlammstapelraum 4 ausgebildeten Behälter 1 gezeigt, in den sowohl die beiden Belebungskammern 2,3 als auch die Nachklärkammer 5 jeweils als zylindrische Kammern angeordnet sind.

Da bei Anlagen für ab ca 25 Personen das Volumen des Schlammstapelraumes 4 etwa konstant ist, kann dieser Raum auch eine festeingerichtete Kammer zur Vorklärung mit Grobschlammabscheidung enthalten oder als Anlage ohne Vorklärung mit nur einem Schlammstapelraum ausgebildet sein.
Diese Anordnung läßt sich in besonders kostengünstiger Weise auch zum Ausbau bzw. zur Modernisierung bereits bestehender älterer Kleinkläranlagen einsetzen. Diese alten oder älteren Anlagen bestehen vielfach aus nur einem Behälter der jeweils nur eine mechanische Reinigung bewirkt mit einer Reinigungsleistung von ca. 30% und daher den heutigen Anforderungen nicht gerecht werden.Die Umrüstung einer derartigen Anlage auf eine vollbiologische Anlage geschieht nach der vorliegenden Erfindung dadurch, daß in den einen vorhandenen Behälter ein weiterer Behälter als Nachklärbecken eingesetzt und der verbleibende Raum durch Einziehen einer Trennwand in eine erste und eine zweite Belebungskammer unterteilt wird. Bei einem entsprechend großen vorhandenen Behälter können auch die Belebungskammern und die Nachklärkammer als jeweils eigene Behälter eingesetzt und mit entsprechenden Verbindungsleitungen versehen werden.
Hierbei kann,- wie in allen Fällen schwach belasteter Anlagen in der offenbarten Einbehälterversion, die infolge des Fehlens eines Schlammstapelraumes etwa 1-2 Überschußschlammabzüge pro Jahr je nach Belastung der Anlage verlangen- vorgesehen sein, daß nach dem Abschalten der Belüftung ein Abzug des Überschußschlammes zum Abtransport im Bereich des Bodens der Anlage erfolgt.

Auf diese relativ einfache Weise lassen sich alte Anlagen kostengünstig in vollbiologische Anlagen umrüsten. Dies ermöglicht daß die vielen vorhandenen alten Kleinkläranlagen Anschluß an den heute erwünschten Stand der Technik erlangen. Sie können dabei sowohl Übergangslösungen darstellen, als auch als neue Anlagen installiert werden bei sehr schwach belasteten Anlagen, wenn zB. nur eine Person oder zwei Personen ein Haus bewohnen. In der nächst größeren Version bis etwa 8 Personen können auch die zwei Belebungsbecken durch Wegnahme der Trennwand zu nur einer Belebungskammer vereinigt werden. Eine solche Anlage benötigt jedoch eine mechanische Vorreinigung.

Es ergibt sich damit für die erfindungsgemäß Anlage eine außerordentliche Variationsbreite zur optimalen Anpassung an den jeweiligen Bedarfsfall.

## Patentansprüche

1. Kleinkläranlage in kompakter Bauweise mit einzelnen, in einem gemeinsamen Behälter angeordneten Kammern, einem Abwasserzulauf und einem Klarwasserablauf und Verbindungsleitungen zwischen einzelnen Kammern und mit einer Einrichtung zur Belüftung
dadurch gekennzeichnet,
daß in einem runden Behälter (1) zwei hintereinander geschaltete Belebungskammern (2,3), die durch eine Verbindungsleitung (11) miteinander verbunden sind und ferner eine Nachklärkammer (5) sowie ein Schlammstapelraum (4) sowie ferner eine Belüftung (15,16,17) und eine Schlammüberschußleitung (7b) zwischen der Nachklärkammer (5) und dem Schlammstapelraum (4) angeordnet ist wobei die Belebungskammern (2,3) mit Rohabwasser ohne mechanische Vorklärung beschickt werden.

2. Anlage nach Anspruch 1, dadurch gekennzeichnet,
daß der Behälter (1) in längsrichtung in etwa zwei gleiche Abschnitte durch eine Trennwand (6)unterteilt ist, wobei der eine Abschnitt den Schlammstapelraum (4) bildet und die Nachklärkammer (5) in dem anderen Abschnitt angeordnet ist, wobei der verbleibende Raum dieses Abschnittes in die zwei Belebungskammern (2,3) durch die Wand der Nachklärkammer (5) und eine Trennwand (5d) unterteilt ist.

3. Anlage nach Anspruch 1 dadurch gekennzeichnet,
daß die Nachklärkammer (5) aus einem zylindrischen Teil (5a) und einem nach unten verjüngten kegelstumpfförmigen Teil (5b) besteht und in dem Behälter (1) auf Stelzen (5c) angeordnet ist.

4. Anlage nach Anspruch 2 oder 3, dadurch gekennzeichnet,
daß der Durchmesser der Nachklärkammer (5) gleich dem Radius des Behälters (1) ist.

5. Anlage nach einem der Ansprüche 1 bis 4, dadurch gekennzeichnet,
daß in der ersten Belebungskammer (2) vor dem Eintritt in die Verbindungsleitung (11) ein Rechenkorb angeordnet ist.

6. Anlage nach einem der Ansprüche 1 bis 5, dadurch gekennzeichnet,
daß den Belebungskammern (2,3) über Belüftungsleitungen (15,16) aus einer Sammelleitung (17) Luft mittels eines Belüfters (18) zugeführt wird und an der Sammelleitung (17) ferner Leitungen (19,20) zum Lufteintrag in eine Rücklaufschlammleitung (7a) und eine Überschußschlammleitung (7b) angeschlossen sind, wobei der Lufteintrag in die Leitungen (7a,7b)im Bereich der Stelzen (7b) erfolgt.

7. Anlage nach einem der Ansprüche 1bis 6, dadurch gekennzeichnet,
daß der Behälter (1) einen Anschluß für eine getrennt angeordnete Vorklärkammer aufweist.

8. Anlage nach einem der Ansprüche 1 bis 7, dadurch gekennzeichnet,
daß das Belebungsbecken (2) einen Anschluß für eine getrennt angeordnete weitere Kammer aufweist.

9. Anlage nach einem der Ansprüche 1 bis 8, dadurch gekennzeichnet,
daß die Nachklärkammer (5) samt Trennwand (5d) lösbar in dem Behälter (1) angeordnet ist.

10. Anlage nach einem der Ansprüche 1 bis 6, dadurch gekennzeichnet, daß mindestens einer der Belebungskammern ( 2,3 ) eine Vorklärkammer zugeordnet ist.

11. Anlage nach Anspruch 10, dadurch gekennzeichnet, daß die Vorklärkammer in dem Behälter ( 1 ) integriert ist.

12. Anordnung nach Anspruch 1, 3,oder 4 bis 6, dadurch gekennzeichnet, daß der Behälter (1) in längsrichtung in zwei etwa gleiche Abschnitte durch eine Trennwand (6) unterteilt ist, wobei der eine Abschnitt den Schlammstapelraum (4) bildet und daß in diesem Raum die Nachklärkammer (5) angeordnet ist und in dem anderen Raum durch Unterteilung mittels einer Trennwand (5d) die zwei Belebungskammern (2,3) gebildet werden.
